# FASCICULE DE BREVET EUROPEEN

(11) **EP 3 126 475 B1**
(45) Date de publication et mention de la délivrance du brevet: **13.10.2021**
(21) Numéro de dépôt: 15773352.8
(22) Date de dépôt: 31.03.2015
(51) Int. Cl.: C10M 107/42, C10M 107/28, C10M 107/44, C10M 149/14, B21B 1/40, C10N 20/04, C10N 40/14, C10N 50/00, C10N 60/00, C10N 80/00, H01M 4/134, H01M 4/36, H01M 4/40, H01M 4/62, H01M 10/052

(54) **UTILISATION DE POLYMÈRES COMME AGENTS LUBRIFIANTS DANS LA PRODUCTION DE FILMS DE MÉTAUX ALCALINS**
VERWENDUNG VON POLYMEREN ALS SCHMIERMITTEL BEI DER HERSTELLUNG VON ALKALIMETALLFOLIEN
USE OF POLYMERS AS LUBRICATING AGENTS IN THE PRODUCTION OF ALKALI METAL FILMS

(30) Priorité: 01.04.2014 US 201461973493 P
(43) Date de publication de la demande: 08.02.2017
(73) Titulaire: Hydro-Québec, Montréal QC H2Z 1A4 (CA)
(72) Inventeur: ZAGHIB, Karim, Longueuil, Québec J4N 1T8 (CA); ARMAND, Michel, 75014 Paris (FR); BOUCHARD, Patrick, Shawinigan, Québec G9N 1B2 (CA); VERREAULT, Serge, St-Tite, Québec G0X 3H0 (CA); HAMEL-PÂQUET, Julie, Montréal, Québec H1L 1Y9 (CA); GIRARD, Gabriel, Longueuil, Québec J4J 2J8 (CA)
(74) Mandataire: Lang, Johannes
(86) Numéro de dépôt international: PCT/CA2015/050256
(87) Numéro de publication internationale: WO 2015/149173

(56) Documents cités:
- WO-A1-93/22409
- TW-A- 201 136 953
- US-A- 3 721 113
- US-A- 5 705 603
- US-A- 6 019 801
- US-A1- 2011 100 402
- US-B2- 6 506 840
- GOUZY M-F ET AL: "In vitro blood compatibility of polymeric biomaterials through covalent immobilization of an amidine derivative", BIOMATERI, ELSEVIER SCIENCE PUBLISHERS BV., BARKING, GB, vol. 25, no. 17, 1 août 2004 (2004-08-01), pages 3493-3501, XP004496076, ISSN: 0142-9612, DOI: 10.1016/J.BIOMATERIALS.2003.10.091
- SCHMIDT, U. ET AL.: 'Modification of poly (octadecene-alt- maleic anhydride) films by reaction with functional amines.' JOURNAL OF APPLIED POLYMER SCIENCE vol. 87, no. 8, 2003, ISSN 0021-8995 pages 1255 - 1266, XP002427748

## Description

### DEMANDE PRIORITAIRE

La présente demande revendique la priorité, sous la loi applicable, de la demande provisoire américaine no 61/973,493.

### DOMAINE TECHNIQUE

La technologie se rapporte au domaine des polymères et à leur utilisation comme agents lubrifiants de laminage (entre des rouleaux) et aux compositions les comprenant. La technologie se rapporte aussi aux films de métaux alcalins comprenant l'agent lubrifiant et/ou la composition sur une ou ses deux surface(s). La technologie est aussi reliée aux procédés de production de films minces de métaux alcalins, ou de leurs alliages, comprenant l'utilisation des agents lubrifiants et des compositions, et aux films ainsi produits, qui sont adaptés pour utilisation dans des cellules électrochimiques.

### CONTEXTE

La production de films minces de lithium sous forme de larges bandes, et en longueurs de plusieurs dizaines de mètres, au moyen de procédés rapides et fiables, fait face à d'importantes difficultés techniques attribuables aux propriétés physiques et chimiques extrêmes de ce métal : réactivité chimique, malléabilité, auto-soudage rapide par simple contact et forte adhésion sur la plupart des matériaux solides, y compris les métaux usuels.

Les méthodes de laminage précédentes telles que décrites dans le brevet américain No 3,721,113, utilisent des rouleaux de plastique dur ou de métal recouvert de plastique, mais des passages successifs du film entre les rouleaux étaient nécessaires afin d'obtenir un film d'environ 30 à 40 µm. Des procédés basés sur le revêtement de lithium fondu sur un support métallique ou plastique, ont aussi été décrits dans le brevet américain No 4,824,746.

Les difficultés rencontrées lors de la réalisation du laminage de films minces de lithium, par exemple, ayant une épaisseur pouvant aller de 5 à 40 microns, sont principalement dues à la réactivité et à l'adhésion du métal laminé aux matériaux avec lesquels il est en contact (e.g. les rouleaux de laminage, les films plastiques de protection, les additifs de laminage), ainsi qu'aux mauvaises propriétés mécaniques des feuillards minces. Par exemple, un film de lithium de 20 µm d'épaisseur et de 10 cm de largeur se brise sous une tension d'étirement de 579.13 kPa ou plus, ce qui ne permet pas de tirer sur le film à la sortie des rouleaux ou de décoller celui-ci des rouleaux de laminage si le film de lithium y adhère un tant soit peu.

Une approche normalement utilisée pour le laminage ou le calandrage de métaux durs, tels que le fer et le nickel, est basée sur l'emploi d'additifs de laminage liquides tels que des solvants organiques et pouvant contenir des graisses ou des agents lubrifiants. Des exemples incluent les acides gras ou leurs dérivés comme les acides laurique ou stéarique, et les alcools, par exemple EPAL 1012™ d'Ethyl Corporation U.S.A., un mélange d'alcools primaires linéaires en C₁₀-C₁₂. Pour le lithium et particulièrement pour le lithium destiné à l'utilisation dans des cellules électrochimiques, l'emploi de tels additifs implique des inconvénients majeurs résultant de la réactivité du lithium et/ou de la nature non-conductrice de ces additifs.

Selon un exemple, la réactivité chimique de la surface du lithium en contact avec des solvants ou agents lubrifiants comprenant des fonctions organiques réactives (par exemple, des acides organiques et des alcools) créera une couche de passivation isolante électroniquement à la surface du métal, limitant ainsi le bon fonctionnement des cellules électrochimiques, en particulier dans des piles rechargeables.

Dans un deuxième exemple, le retrait des agents lubrifiants ou graisses restés en contact avec le lithium après laminage est très difficile. Ces agents lubrifiants sont des isolants électriques et ne sont pas solubles dans l'électrolyte. Lorsque ceux-ci sont laissés sur les films produits, ils nuisent ainsi au bon fonctionnement des électrodes de lithium qui en sont constituées. Le lavage de ces agents sur la surface du film de lithium conduit généralement à une contamination de la surface, c'est-à-dire à des films de lithium de moindre qualité.

Les méthodes de laminage employant des agents lubrifiants pour la préparation de façon plus fiable de films minces de lithium ont été décrits dans les brevets américains nos 5,837,401 et 6,019,801. Les agents lubrifiants utilisés dans ces deux brevets comprennent des polymères incluant des chaines polymériques solvatantes. Les agents préférés qui y sont décrits sont basés sur des diesters d'acides gras, tels que les distéarates de polyoxyéthylène de formule : CH₃(CH₂)₁₆C(O)O(CH₂CH₂O)ₙC(O)(CH₂)₁₆CH₃, où n varie entre 3 et 100, les polymères ayant des segments polyoxyéthylène de masse moléculaire égale à 200, 400 et 600 étant préférés. Les méthodes décrites dans ceux-ci permettent la production, par exemple, de films de lithium de 300 mètres de long avec une épaisseur de 25 µm ± 2 µm à une vitesse d'environ 20 m/min. Il est généralement décrit que ces méthodes peuvent atteindre une vitesse de production allant jusqu'à 50 m/min.

Tandis que cette méthode était une amélioration par rapport à la technologie disponible à l'époque, il existe toujours un besoin pour le développement de nouveaux agents lubrifiants améliorés, par exemple, atteignant une conductivité accrue et/ou permettant d'obtenir des cellules électrochimiques avec une durée de vie, en cycles, améliorée.

Des polymères modifiés à base de films de poly(octadécène-*alt*-anhydride maléique) sur des plaques de verre ont été décrits dans Schmidt et al, 2003, J. Appl. Polym. Sc., 87, 1255-1266. Ce document, en fait, réfère à l'incorporation d'amines fonctionnalisées dans le polymère et l'utilisation des plaques de verre obtenues dans des études d'immobilisation covalente de protéines, une utilisation très différente de celle d'agents lubrifiants dans le laminage de métaux alcalin.

### DESCRIPTION SOMMAIRE

L'invention est telle que définie dans les revendications annexées.

La présente demande décrit un agent lubrifiant défini comme un polymère de Formule I: 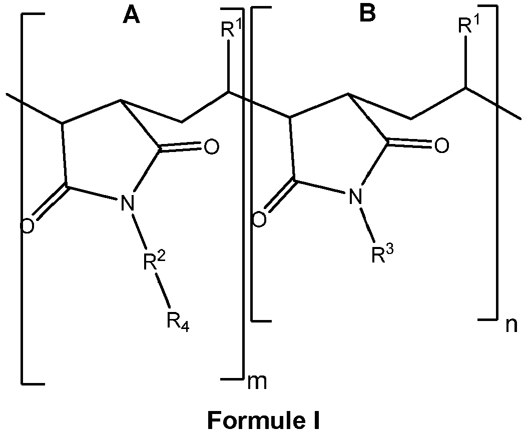 dans lequel,
m est un nombre entier positif et désigne le nombre d'unités répétitive A dans le polymère; n est zéro ou un nombre entier positif et désigne le nombre d'unités répétitive B dans le polymère, l'unité répétitive B étant absente lorsque n est zéro; où m et n sont choisis tel que la masse moléculaire du polymère de Formule I située dans l'intervalle de 1000 à 10⁶;
R¹ est, indépendamment à chaque occurrence, choisi parmi les radicaux hydrocarbonés monovalents linéaires ou ramifiés;
R² est, indépendamment à chaque occurrence, choisi parmi -CH₂CH₂O- et -CH₂CH₂CH₂O-, où R² est lié à N par un atome de carbone, ou R² est absent et N est lié de façon covalente à R⁴;
R³ est, indépendamment à chaque occurrence, choisi parmi les radicaux hydrocarbonés monovalents linéaires ou ramifiés;
R⁴ est, indépendamment à chaque occurrence, un résidu polyéther de formule -[CH(R⁵)CH₂O]ₛCH₃, où 5 ≤ s ≤ 100 ; et
R⁵ est, indépendamment à chaque occurrence, H ou CH₃.

Selon un mode de réalisation, m et n sont choisis de sorte que la masse moléculaire de l'agent lubrifiant de Formule I se situe dans l'intervalle de 2000 à 250 000, ou de 2000 à 50 000, ou encore de 50 000 à 200 000. Selon un autre mode de réalisation, le ratio des unités répétitives A:B en pourcentage molaire dans le polymère se situe dans l'intervalle de 100:0 à 10:90.

Selon un autre mode de réalisation, R¹ est, indépendamment à chaque occurrence, un radical hydrocarboné linéaire ou ramifié de formule CᵣH₂ᵣ₊₁, où 4 ≤ r ≤ 24, ou dans lequel 8 ≤ r ≤ 18 et tous les autres groupes sont tels que définis précédemment. Dans un autre mode de réalisation, R³ est, indépendamment à chaque occurrence, un radical hydrocarboné linéaire ou ramifié de formule CₜH₂ₜ₊₁, où 4 ≤ t ≤ 24, ou dans lequel 8 ≤ t ≤ 18, et tous les autres groupes sont tels que définis précédemment. Dans un autre mode de réalisation, s est choisi parmi les nombres entiers allant de 8 à 50, et tous les autres groupes sont tels que définis précédemment.

Selon un autre mode de réalisation, R² est, à chaque occurrence, un radical divalent de formule -CH₂CH₂O-, ou R² est, à chaque occurrence, un radical divalent de formule -CH₂CH₂CH₂O-, ou encore R² est absent, et tous les autres groupes sont tels que définis précédemment.

Selon un mode de réalisation, R⁴ est un résidu polyéther de formule - [CH(R⁵)CH₂O]ₛCH₃, dans lequel R⁵ est CH₃ à chaque occurrence, et tous les autres groupes sont tels que définis précédemment. Dans un autre mode de réalisation, R⁵ est un atome d'hydrogène à chaque occurrence, et tous les autres groupes sont tels que définis précédemment. Selon un autre mode, R⁵ est, indépendamment à chaque occurrence, CH₃ ou hydrogène, tel que R⁴ est un résidu polyéther comprenant des unités répétitives d'oxyde de propylène (PO) et d'oxyde d'éthylène (EO), par exemple dans un ratio molaire en PO:EO situé entre environ 20:1 et environ 1:30, ou entre environ 10:1 et environ 1:10. Selon un exemple, le résidu polyéther R⁴ a une masse moléculaire se situant dans l'intervalle allant d'environ 300 g/mole à environ 5000 g/mole, ou allant d'environ 500 g/mole à environ 2500 g/mole.

Selon un autre mode de réalisation, l'agent lubrifiant est choisi parmi les Polymères 1 à 5 tels que définis au Tableau 1.

La présente demande décrit une composition comprenant un agent lubrifiant tel qu'ici défini, conjointement avec un solvant inerte aux métaux alcalins. Par exemple, le solvant est choisi parmi les solvants hydrocarbonés, les solvants aromatiques, et leurs combinaisons, c'est-à-dire des systèmes de solvants comprenant un solvant aromatique et un solvant hydrocarboné. Le solvant hydrocarboné peut être choisi parmi l'hexane et l'heptane et le solvant aromatique peut être le toluène. Selon un mode de réalisation, la composition comprend l'agent lubrifiant à une concentration d'environ 0.001% à environ 10% (poids/volume), ou environ 0.01% à environ 5% (poids/v), du volume total de la composition.

Selon un aspect, la présente demande décrit aussi un film de métal alcalin ayant une première et une deuxième surface, et comprenant sur au moins l'une des première et deuxième surfaces, une mince couche de l'agent lubrifiant ou de la composition. Par exemple, le film de métal alcalin a une épaisseur si situant dans l'intervalle d'environ 5 µm à environ 50 µm. Selon un mode de réalisation, le métal alcalin est choisi parmi le lithium, les alliages de lithium, le sodium, et les alliages de sodium, ou du lithium ayant une pureté d'au moins 99% en poids, ou un alliage de lithium comprenant moins de 3000 ppm d'impuretés en poids.

Dans un autre mode de réalisation, le film de métal alcalin tel qu'ici défini comprend une couche de passivation sur au moins une de ses première et deuxième surfaces, éventuellement, sur ses deux surfaces. Par exemple, la couche de passivation peut être d'une épaisseur de 500 Å ou moins, de 100 Å ou moins, ou encore de 50 Å ou moins. Par exemple, le métal alcalin est du lithium ou un alliage de lithium et la couche de passivation comprend du Li₂O, du Li₂CO₃, du LiOH, ou une combinaison d'au moins deux de ceux-ci.

Selon encore un autre aspect, la présente demande décrit un procédé pour la production d'un film de métal alcalin et le film de métal alcalin ainsi produit, le procédé comprenant les étapes :
a) d'application d'une composition comprenant un agent lubrifiant tel qu'ici défini sur au moins l'une des première et deuxième surface d'un feuillard de métal alcalin afin d'obtenir un feuillard de métal alcalin lubrifié; et
b) de laminage du feuillard de métal alcalin lubrifié obtenu à l'étape (a) entre au moins deux rouleaux pour produire un film de métal alcalin.

Dans une mode réalisation, au moins les étapes (a) et (b) sont accomplies sous atmosphère d'air essentiellement sec, par exemple, dans une chambre anhydre ou à humidité contrôlée avec un point de rosée situé entre -45 et -55°C, pour 0.7 to 2.2% d'humidité relative, préférablement un point de rosée d'environ -50°C et une humidité relative d'environ 1.3%.

Selon un autre mode de réalisation, le procédé comprend, en outre, une étape d'obtention du feuillard de métal alcalin, par exemple, par extrusion d'un lingot ou d'une tige de métal alcalin.

Selon un autre aspect, l'étape (a) s'effectue par l'application de la composition sur le feuillard à l'entrée des rouleaux et peut aussi s'effectuer par enduction préalable des rouleaux de laminage avec ou sans ajout additionnel de composition directement sur le feuillard avant l'étape (b).

Les films de métaux alcalins tels que définis ici peuvent être utilisés, entre autre, pour la production d'électrodes et de cellules électrochimiques les comprenant en combinaison avec un électrolyte et une contre-électrode, préférablement tous deux sous forme de films. L'électrolyte peut être un électrolyte liquide non-aqueux comprenant un solvant organique compatible, un électrolyte liquide constitué d'un sel fondu, un électrolyte polymère gel ou un électrolyte polymère solide. La contre-électrode comprend un matériau actif de contre-électrode tel qu'ici défini ou tel que généralement utilisé dans le domaine.

### DESCRIPTION DÉTAILLÉE

La description détaillée et les exemples qui suivent sont à titre d'illustration et ne doivent pas être interprétés comme limitant davantage la portée de l'invention telle que définie dans les revendications.

Le terme « environ » tel qu'utilisé dans le présent document signifie approximativement, dans la région de, et autour de. Lorsque le terme « environ » est utilisé en lien avec une valeur numérique, il la modifie au-dessus et en dessous par une variation de 10% par rapport à la valeur nominale. Ce terme peut aussi tenir compte, par exemple, de l'erreur expérimentale d'un appareil de mesure.

Lorsqu'un intervalle de valeurs est mentionné dans la présente demande, les bornes inférieures et supérieures de l'intervalle sont, à moins d'indication contraire, toujours incluses dans la définition.

### I. Agents lubrifiants et leurs compositions:

Les polymères décrits ici sont utiles comme agents lubrifiants utilisés dans le laminage de films de métaux alcalins. Ces agents sont des copolymères polyéther d'alkyl-succinimide de Formule I: 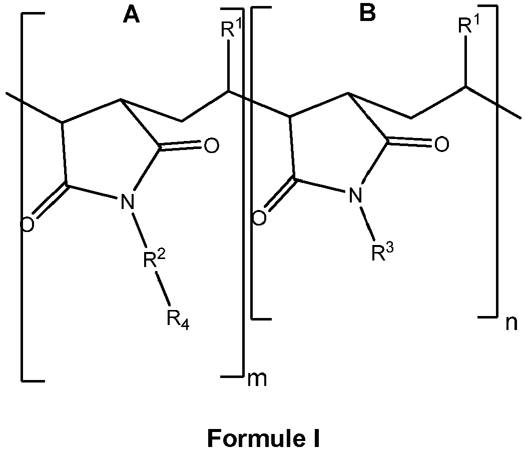 dans lequel,
m et n désignent respectivement le nombre d'unités répétitives A et B dans le polymère, m étant un nombre entier positif et n étant un nombre entier positif ou zéro quand l'unité répétitive B est absente, et où m et n sont choisis tel que la masse moléculaire du polymère de Formule I se situe dans l'intervalle de 1000 à 10⁶, de 2000 à 250 000, de 2000 à 100 000, de 2000 à 50 000, ou encore de 50 000 à 200 000, bornes incluses;
R¹ est, indépendamment à chaque occurrence, choisi parmi les radicaux hydrocarbonés monovalents linéaires ou ramifiés, de préférence parmi les radicaux hydrocarbonés monovalents linéaires ou ramifiés de formule CᵣH₂ᵣ₊₁, où 4 ≤ r ≤ 24, de préférence où 8 ≤ r ≤ 18;
R² est, indépendamment à chaque occurrence, choisi parmi -CH₂CH₂O- et -CH₂CH₂CH₂O-, où R² est lié à N par un atome de carbone, ou R² est absent et N est lié à R⁴ de façon covalente;
R³ est, indépendamment à chaque occurrence, choisi parmi les radicaux hydrocarbonés monovalents linéaires ou ramifiés, de préférence parmi les radicaux hydrocarbonés monovalents linéaires ou ramifiés de formule CₜH₂ₜ₊₁, où 4 ≤ t ≤ 24, de préférence où 8 ≤ t ≤ 18;
R⁴ est, indépendamment à chaque occurrence, un résidu polyéther de formule -[CH(R⁵)CH₂O]ₛCH₃, où 5 ≤ s ≤ 100, de préférence où 8 ≤ s ≤ 50; et
R⁵ est, indépendamment à chaque occurrence, un atome d'hydrogène ou un groupe CH₃.

Selon un mode de réalisation, le ratio des unités répétitives A:B en pourcentage molaire dans l'agent lubrifiant se situe entre 100:0 et 10:90, de préférence entre 100:0 et 20:80, bornes incluses. Selon un autre mode de réalisation, le ratio des unités répétitives A:B en pourcentage molaire dans l'agent lubrifiant se situe entre 60:40 et 10:90.

Selon un mode de réalisation, R⁴ est un résidu polyéther de formule - [CH(R⁵)CH₂O]ₛCH₃, dans lequel 5 ≤ s ≤ 100, et R⁵ est CH₃ à chaque occurrence, de préférence où 8 ≤ s ≤ 50. Dans un autre mode de réalisation, R⁴ est un résidu polyéther de formule -[CH(R⁵)CH₂O]ₛCH₃, dans lequel 5 ≤ s ≤ 100, et R⁵ est un atome d'hydrogène à chaque occurrence, de préférence où 8 ≤ s ≤ 50. Selon un autre mode différent, R⁴ est un résidu polyéther de formule -[CH(R⁵)CH₂O]ₛCH₃ dans lequel 5 ≤ s ≤ 100 et R⁵ est indépendamment à chaque occurrence CH₃ ou hydrogène, de préférence où 8 ≤ s ≤ 50, R⁴ étant ainsi une chaîne polyéther possédant des unités répétitives d'oxyde de propylène (PO) et d'oxyde d'éthylène (EO) (aussi référé ici comme une chaîne polyéther PO/EO).

Selon un mode de réalisation, R⁴ est une chaîne polyéther PO/EO liée de façon covalente à N (l'atome d'azote d'un groupe succinimide). Des exemples de ces chaînes polyéthers PO/EO comprennent, sans limitation, les polyéthers possédant un ratio molaire PO/EO variant d'environ 20:1 à environ 1:30, ou d'environ 10:1 à environ 1:10, de préférence ayant une masse moléculaire se situant entre environ 300 et environ 5000, de préférence environ 500 et environ 2500. Des exemples de R⁴ comprennent aussi les chaînes polyéther PO/EO d'amines polyéthers, le groupement amine faisant partie du succinimide de l'unité A, comme les monoamines Jeffamine® de la série "M", par exemple les M-600, M-1000, M-2005 et M-2070 (Huntsman Corporation, Texas, U.S.A), ayant un contenu molaire respectif en PO:EO de 9:1, 3:19, 29:6 et 10:31.

Selon un aspect, la teneur en unité répétitive B dans le polymère de Formule I est ajusté afin d'obtenir un polymère soluble dans un solvant ou un système de solvant non-polaire, par exemple, un tel solvant ou système de solvants comprend des solvants hydrocarbonés (par exemple, hexane, heptane), aromatiques (par exemple, le toluène), ou leurs mélanges.

Des exemples non-limitatifs de polymères agents lubrifiants de Formule I sont tels que détaillés au Tableau 1.

**Tableau 1**

| Polymère | R¹ | R² | R³ | R⁴ (PO:EO) | Ratio A: B (%molaire approx.) | Masse Molécuaire (approx.) |
|---|---|---|---|---|---|---|
| 1 | C₁₆H₃₃ | Absent | Absent | 3:19 | 100:0 | 5000 |
| 2 | C₁₆H₃₃ | Absent | Absent | 10:31 | 100:0 | 5000 |
| 3 | C₁₆H₃₃ | Absent | C₁₈H₃₇ | 3:19 | 33:67 | 145,000 - 175,000 |
| 4 | C₁₆H₃₃ | Absent | C₁₈H₃₇ | 10:31 | 20:80 | 165,000-195,000 |
| 5 | C₁₆H₃₃ | Absent | Absent | 29:6 | 100:0 | 7000 |

Par exemple, les agents lubrifiants de Formule I peuvent être préparés par: (a) l'obtention d'un copolymère alterné (*alt*) d'alkylène R₁CHCH₂ et d'anhydride maléique, R₁ étant tel que défini précédemment. Ce copolymère est ensuite réagi avec une amine de formule R₄-R₂-NH₂, éventuellement en même temps, préalablement ou postérieurement avec une amine de formule R₃-NH₂, dans laquelle R₂, R₃, et R₄ sont tel que définis précédemment. Des exemples de méthodes de production d'agents lubrifiants sont ici illustrés plus en détail dans les Exemples de Synthèse 1 à 4.

Les compositions décrites ici comprennent au moins un agent lubrifiant de Formule I. Ces compositions peuvent aussi comprendre des composantes additionnelles comme des solvants inertes aux métaux alcalins. Des exemples de solvants incluent, sans limitation, les solvants hydrocarbonés (par exemple, l'hexane, l'heptane, etc.), les solvants aromatiques (par exemple, le toluène, etc.), ou leurs mélanges.

### II. Films de métaux alcalins

Les films de métaux alcalins consistent en, par exemple, du lithium ou un alliage de lithium, du sodium ou un alliage de sodium, de préférence du lithium ou un alliage dans lequel le lithium est la composante majeure, préférablement du lithium ayant une pureté d'au moins 99% par poids, ou un alliage de lithium comprenant moins de 3000 ppm d'impuretés par poids.

Selon un mode de réalisation, le film de métal alcalin tel que produit ici comprend sur l'une de ses deux surfaces ou sur ces deux surfaces, une mince couche d'un agent lubrifiant de Formule I ou d'une composition le comprenant. Par exemple, les films de lithium comprenant sur une(des) surface(s) au moins un agent lubrifiant ou une composition de l'invention peuvent généralement présenter une impédance plus faible lorsque comparés à des films de lithium produits avec l'utilisation d'autres additifs lubrifiants. D'autres propriétés améliorées de ces films peuvent aussi inclure une couche de passivation plus stable et plus uniforme, et des propriétés de cyclage améliorées.

Lorsque la méthode de production du film mince de lithium est accomplie sous atmosphère d'air essentiellement anhydre, la couche de passivation sur le film de lithium comprend du carbonate de lithium, de l'oxyde de lithium et/ou de l'hydroxyde de lithium.

### III. Procédé pour la production de films de métaux alcalins:

Les films de métaux alcalins tels décrits ici sont produits par laminage ou calandrage entre des rouleaux en utilisant les agents lubrifiants de Formule I et les compositions les comprenant. Des procédés de préparation de films de lithium par laminage de métal sont illustrés, par exemple, dans les brevet américains nos 5,837,401 et 6,019,801 (tous deux émis au nom de Gauthier et al.). Les procédés décrits dans Gauthier *et al.* peuvent être réalisés en utilisant les agents lubrifiants et compositions tels que décrits ici (par exemple, voir la Section I ci-dessus).

Par exemple, un feuillard de lithium d'environ 250 µm d'épaisseur est utilisé dans le procédé de laminage pour produire un film de lithium. Les feuillards de lithium peuvent être obtenus, par exemple, par extrusion de lingots ou tiges de lithium disponibles commercialement.

De manière générale, un feuillard de lithium, préalablement monté sur un dérouleur, est passé entre deux rouleaux de travail. Un lubrifiant est ajouté (par exemple, à l'aide d'un bec verseur sur le feuillard et/ou par enduction préalable des rouleaux de travail) au point d'insertion du feuillard de lithium entre les deux rouleaux, c'est-à-dire juste avant l'étape de laminage. Selon un mode de réalisation, le film de lithium sortant des rouleaux de travail peut être enroulé sur un enrouleur pour utilisation ultérieure. Dans ce mode particulier, le lubrifiant agit, du moins en partie, afin de prévenir l'adhésion du film de lithium sur lui-même. Selon un autre mode de réalisation, le film de lithium lubrifié produit est utilisé directement pour d'autres étapes de laminage (par exemple, par laminage en continu ou en série) avec une couche d'électrolyte polymère solide, une couche protectrice, et/ou un collecteur de courant (par exemple, dans une configuration collecteur de courant/film de lithium/électrolyte ou une configuration collecteur de courant/film de lithium/couche protectrice/électrolyte). Dans chaque cas, les enrouleurs ou laminoirs disposés en série fournissent une tension suffisante au film de lithium afin de réduire l'adhésion du film de lithium aux rouleaux de travail mais sans tension excessive afin d'éviter le déchirement du film de lithium.

Par exemple, l'étape de laminage entre rouleaux peut produire un film de métal alcalin à une vitesse dans la plage d'environ 10 m/min à environ 50 m/min de film de métal alcalin.

Il est évident que les rouleaux de travail doivent être composés et/ou recouverts d'un matériau inerte envers le métal alcalin (comme le lithium métallique) en présence de l'agent lubrifiant et/ou de la composition de l'invention. Par exemple, les rouleaux peuvent être composés de polymères durs tels que les plastiques, les rouleaux métalliques recouverts de matière plastique, les rouleaux en acier inoxydable, etc.

Le procédé de l'invention peut être effectué sous atmosphère anhydre, de préférence sous atmosphère d'air essentiellement sec, par exemple, dans une chambre anhydre ou à humidité contrôlée, par exemple ayant un point de rosée entre -45 et -55°C, pour de 0.7 à 2.2% d'humidité relative, de préférence un point de rosée d'environ -50°C pour 1.3% d'humidité relat ive.

### IV. Cellules électrochimiques:

Les films de métaux alcalin tels que produits ici sont utiles pour la fabrication de cellules électrochimiques. Par exemple, les cellules électrochimiques comprennent au moins une électrode ayant un film de matériau alcalin, comme le lithium, en tant que matériau actif d'électrode, une contre-électrode et un électrolyte entre l'électrode et la contre-électrode. Une option concerne les cellules électrochimiques comprenant une pluralité d'agencements (par exemple, une pluralité d'agencements électrode/électrolyte/contre-électrode ou contre-électrode/électrolyte/électrode/électrolyte/contre-électrode). Par exemple, la cellule peut être un matériau multicouche qui peut être plié ou roulé en cylindre.

Des cellules électrochimiques dans lesquelles les films de lithium ici décrits pourraient aussi être utilisés incluent aussi les cellules électrochimiques lithium-air comme celles décrites dans la demande PCT publiée sous le numéro WO2012/071668 (Zaghib et al.)*.*

Selon un aspect, le polymère de Formule I ou sa composition peut être présente à la surface entre le film de lithium et sa couche adjacente (par exemple, le collecteur de courant, l'électrolyte, etc.), ou peut être en partie ou complètement diffuse, dispersée ou dissoute dans l'électrolyte. Selon un autre aspect, l'agent lubrifiant (ou sa composition) est présent entre l'électrode et l'électrolyte et est conducteur d'ion, par exemple de par sa dissolution des sels de lithium présents dans l'électrolyte.

Selon un mode de réalisation préféré, la cellule électrochimique, comprenant un film de lithium tel qu'ici décrit, est scellée ou comprise à l'intérieur d'un compartiment étanche.

### a. Électrode:

Une électrode comprend au moins un film de métal alcalin tel que décrit à la Section II ou tel que préparé par le procédé de la Section III. De préférence, le film de métal alcalin de l'électrode est un film de lithium vif ou un alliage dans lequel le lithium est la composante majoritaire, de préférence du lithium ayant une pureté d'au moins 99% par poids, ou un alliage de lithium comprenant moins de 3000 ppm d'impuretés par poids.

Selon un mode de réalisation, l'électrode comprend, en outre, un collecteur de courant fait d'une couche métallique telle que, par exemple, une couche de nickel ou de cuivre adhérant à la surface du film de métal alcalin opposée de la surface faisant face ou qui fera face à la couche d'électrolyte.

De façon optionnelle, une couche protectrice conductrice d'ions peut être présente entre le film de métal alcalin (par exemple, de Li, Na, ou un alliage de l'un ou l'autre) et l'électrolyte, par exemple, afin de protéger le film de lithium de la dégradation et/ou de prévenir la formation de dendrites. Une couche protectrice conductrice d'ion comprenant, par exemple, un polymère conducteur d'ions, une céramique (par exemple, un oxynitrure de lithium et de phosphore (LIPON) etc.), du verre, ou une combinaison de deux ou plus de ceux-ci, peut être appliquée à la surface du film de lithium ou de la couche d'électrolyte (par exemple, d'un électrolyte polymère solide) avant l'assemblage. Les couches protectrices vitreuses ou de céramique sont appliquées par des procédés standards comme la pulvérisation cathodique, ou l'ablation par laser ou plasma. Des exemples de couches protectrices sont décrits dans la demande PCT publiée sous le numéro WO2008/009107 (Zaghib et al.)*.*

### b. Électrolyte:

Les électrolytes utilisés dans ces cellules électrochimiques incluent tout électrolyte compatible avec l'utilisation d'électrodes de film de lithium vif ou d'un autre métal alcalin. Des exemples de tels électrolytes incluent, sans limitations, les électrolytes liquides non-aqueux, les électrolytes de polymère gel, et les électrolytes de polymère solide. Les électrolytes qui suivent sont à titre d'exemples illustratifs et ne doivent pas être interprétés comme limitatifs.

Par exemple, les électrolytes liquides compatibles incluent les électrolytes liquides organiques comprenant un solvant polaire aprotique tel que le carbonate d'éthylène (EC), le carbonate de diéthyle (DEC), le carbonate de propylène (PC), le carbonate de diméthyle (DMC), le carbonate de méthyle et d'éthyle (EMC), la γ-butyrolactone (γ-BL), le carbonate de vinyle (VC), et leurs mélanges, et des sels de lithium comme LiTFSI, LiPF₆, etc. D'autres exemples d'électrolytes liquides compatibles incluent les électrolytes de sels fondus comprenant des sels de lithium comme le chlorure de lithium, le bromure de lithium, le fluorure de lithium, et les compositions les comprenant, or des sels organiques. Des exemples non limitatifs d'électrolytes liquides de sels fondus peuvent être trouvés dans US2002/0110739 (McEwen et al)*.* L'électrolyte liquide peut imprégner un séparateur comme un séparateur en polymère (par exemple, de polypropylène, de polyéthylène, ou d'un copolymère de ceux-ci).

Les électrolytes polymère gel compatible peuvent comprendre, par exemple, des précurseurs de polymère et des sels de lithium (tels que LiTFSI, LiPF₆, etc.), un solvant polaire aprotique tel que défini ci-dessus, un initiateur de polymérisation/réticulation lorsque requis. Des exemples de tels électrolytes gels incluent, sans limitations, les électrolytes gels décrits dans les demandes PCT publiées sous les numéros WO2009/111860 (Zaghib et al.) et WO2004/068610 (Zaghib et al.)*.* Un électrolyte gel peut aussi imprégner un séparateur tel que défini ci-dessus.

Les électrolytes polymère solides (EPS) peuvent généralement comprendre un ou des polymères solides polaires réticulés ou non et des sels, par exemple, des sels de lithium tels que LiTFSI, LiPF₆, LiDCTA, LiBETI, LiFSI, LiBF₄, LiBOB, etc. Des polymères de type polyéther tels que les polymères basés sur le poly(oxyde d'éthylène) (PEO) peuvent être utilisés, mais plusieurs autres polymères compatibles avec le lithium sont aussi connus pour la production de EPS. Des exemples de tels polymères incluent les polymères multi-branche en forme d'étoile ou de peigne comme ceux décrits dans la demande PCT publiée sous le no WO2003/063287 (Zaghib et al.)*.*

### c. Contre-électrode:

Les contre-électrodes comprennent au moins un matériau électrochimiquement actif (MEA) compatible avec l'utilisation d'électrodes de métal alcalin, et particulièrement de lithium métallique. Tout MEA de contre-électrode connu du domaine peut être utilisé dans ces cellules électrochimiques. Par exemple, le MEA de contre-électrode peut opérer à un voltage à l'intérieur de la plage d'environ 1V à environ 5V. Des exemples de MEA de contre-électrode se retrouvent, par exemple, dans Whittingham M.S. (2004), Chem. Rev., 104, 4271-4301.

Pour une électrode comprenant un film de lithium, des exemples non-limitatifs de MEA de contre-électrode incluent les titanates de lithium (ex: Li₄Ti₅O₁₂), le soufre ou des matériaux comprenant du soufre, les phosphates de lithium et de métal (ex : LiM'PO₄ où M' est Fe, Ni, Mn, Co, ou leurs combinaisons), les oxydes de vanadium (ex : LiV₃O₈, V₂O₅, etc.), et les oxydes de lithium et de métal, tels que LiMn₂O₄, LiM"O₂ (M" étant Mn, Co, Ni ou leurs combinaisons), Li(NiM"')O₂ (M'" étant Mn, Co, Al, Fe, Cr, Ti, Zr, etc., ou leurs combinaisons).

De façon similaire, le MEA de la contre-électrode lorsque l'électrode comprend un film de sodium sont connus de la personne du métier. Par exemple, ceux-ci incluent le soufre ou un matériau comprenant du soufre, des phosphates de sodium et d'un ou des métaux (ex : Na₂FePO₄F, Na₂FeP₂O₇F, NaVPO₄F, NaV₁₋ₓCrₓPO₄F, où x<1, par exemple 0<x<0.1) ou des sulfates de sodium et d'un métal (ex : Na₂Fe₂(SO₄)₃) Le MEA de contre-électrode peut aussi être de l'oxygène dans une cellule lithium-air ou sodium-air selon le métal alcalin de l'électrode.

La contre-électrode peut aussi comprendre un matériau conducteur électronique comme une source de carbone, incluant, par exemple, du carbone Ketjen®, du carbone Shawinigan, du graphite, des fibres de carbone, des fibres de carbone formée en phase gazeuse (VGCF), du carbone non-poudreux obtenu par carbonisation d'un précurseur organique, et une combinaison de deux ou plus de ceux-ci. Le carbone utilisé peut être d'origine naturelle ou synthétique.

La contre-électrode peut être une contre-électrode composite qui comprend en outre, un liant polymère, et éventuellement un sel de métal alcalin tel que les sels de lithium (ex. : LiTFSI, LiDCTA, LiBETI, LiFSI, LiPF₆, LiBF₄, LiBOB, etc.) ou les sels de sodium (ex. : NaClO₄, NaPF₆, etc.).

Les exemples qui suivent illustrent l'invention et ne doivent pas être interprétées comme limitant la portée de l'invention telle que définie par les revendications.

### EXEMPLES

Afin d'évaluer l'effet du lubrifiant sur la surface d'un film de lithium et les propriétés résultantes, des films de lithium d'une épaisseur de 27 µm, produits selon la procédure décrite dans le brevet américain no 6,019,801, ont été immergés dans les lubrifiants testés. Les films lubrifiés ont ensuite été insérés dans des cellules électrochimiques et leurs propriétés mesurées.

Les composants utilisés dans les Exemples qui suivent sont définis comme suit: PEO(200) distéarate: PEO-200 distéarate tel que décrit dans le brevet américain no 6,019,801.

EPS: "Électrolyte Polymère Solide" basée sur un polymère polyéther tel que décrite dans les brevets américains no 6,903,174 et no 6,855,788 comprenant du LiTFSI comme sel de lithium dans un ratio de 30/1 (oxygène v. Li).

Polymère 1 : est un polymère de Formule I ayant une masse moléculaire d'environ 5000, dans lequel l'unité B est absente, R¹ est C₁₆H₃₃, R² est absent, et R⁴ est lié à N de façon covalente et représente le résidu de Jeffamine® M-1000, un polyétheramine possédant un ratio PO/EO de 3/19.

Polymère 2 : est un polymère de Formule I ayant une masse moléculaire d'environ 5000, dans lequel l'unité B est absente, R¹ est C₁₆H₃₃, R² est absent, et R⁴ est lié à N de façon covalente et représente le résidu de Jeffamine® M-2070, un polyétheramine possédant un ratio PO/EO de 10/31.

C-LiFePO₄: LiFePO₄ enrobé de carbone

### Exemple 1 (Comparatif)

Un lubrifiant a été préparé par l'addition de 1 % par poids de PEO(200) distéarate a une mélange de toluène et d'hexane (80:20 (vol:vol), tous deux anhydres). Un film de lithium de 27 µm d'épaisseur a ensuite été immergé dans ce lubrifiant pendant 5 minutes.

### a. Cellule symétrique:

Une cellule de 4 cm² a été assemblée en laboratoire selon la configuration Li/EPS/Li. L'impédance initiale de la cellule Li/EPS/Li à 80° C était de 15 ohms. Après six semaines, l'impédance a atteint 111 ohms, montrant une augmentation de 640% de l'impédance.

### b. Cellule asymétrique:

Une cellule de 4 cm² a été assemblée en laboratoire selon la configuration C-LiFePO₄/EPS/Li. La cellule a ensuite été déchargée à un taux de C/4 et chargée à un taux de C/4 à un voltage de 2.5 V à 3.8 V à 80°C. La capacité initiale de la cellule était de 158 mAh/g. Après 350 cycles, la capacité a atteint 80 % de la capacité initiale.

### Exemple 2

Le lubrifiant a été préparé par l'addition de 1 % en poids du Polymère 1 à un mélange de toluène et d'hexane (80:20 (vol:vol), tous deux anhydres). Un film de lithium de 27 µm d'épaisseur a ensuite été immergé dans ce lubrifiant pendant environ 5 minutes.

### a. Cellule symétrique:

Une cellule de 4 cm² a été assemblée en laboratoire selon la configuration Li/EPS/Li. L'impédance initiale de la cellule de configuration Li/EPS/Li à 80° C était de 22 ohms. Après six semaines, l'impédance a atteint 48 ohms, montrant une augmentation de 120% de l'impédance.

### b. Cellule asymétrique:

Une cellule de 4 cm² a été assemblée en laboratoire selon la configuration C-LiFePO₄/EPS/Li comme à l'Exemple 1(b). La cellule a ensuite été déchargée à un taux de C/4 et chargée à un taux de C/4 à un voltage de 2.5 V à 3.8 V à 80°C. La capacité initiale de la cellule était de 160 mAh/g. Après 1100 cycles, la capacité a atteint 80 % de la capacité initiale.

### c. Conclusions:

L'augmentation de l'impédance est plus basse dans cette cellule que dans celle de l'Exemple 1, où un lubrifiant à base de PEO(200) distéarate a été utilisé. L'utilisation d'un lubrifiant à base du Polymère 1 résulte en une couche de passivation stable et plus uniforme sur la surface du lithium. La cellule incorporant le film de lithium comprenant une mince couche de Polymère 1 a obtenu une durée de vie en cycles améliorée lorsque comparée à la cellule décrite à l'Exemple 1.

### Exemple 3

Le lubrifiant a été préparé par l'addition de 1% par poids du Polymère 2 à un mélange de toluène et d'hexane (80:20 (vol:vol), tous deux anhydres). Un film de lithium de 27 µm d'épaisseur a ensuite été immergé dans ce lubrifiant pendant environ 5 minutes.

### a. Cellule symétrique:

Une cellule de 4 cm² a été assemblée en laboratoire selon la configuration Li/EPS/Li. L'impédance initiale de la cellule de configuration Li/EPS/Li à 80° C était de 23 ohms. Après six semaines, l'impédance a atteint 45 ohms, montrant une augmentation de 96% en impédance.

### b. Cellule asymétrique:

Une cellule de 4 cm² a été assemblée en laboratoire selon la configuration C-LiFePO₄/EPS/Li comme à l'Exemple 1(b). La cellule a ensuite été déchargée à un taux de C/4 et chargée à un taux de C/4 à un voltage de 2.5 V à 3.8 V à 80°C. La capacité initiale de la cellule était de 161 mAh/g. Après 1300 cycles, la capacité a atteint 80 % de la capacité initiale (une baisse de 20%).

### c. Conclusions:

L'augmentation de l'impédance est plus basse pour cette cellule que pour celle de l'Exemple 1(b) où le lubrifiant à base de PEO(200) distéarate était utilisé. L'utilisation du lubrifiant à base de Polymère 2 résulte aussi en une couche de passivation très stable et plus uniforme sur la surface du lithium. Cette cellule a aussi obtenu une durée de vie en cycle améliorée lorsque compare à la cellule décrite à l'Exemple 1(b).

### Exemple de Synthèse 1

36.26 g d'un polymère poly(octadécène-*alt*-anhydride maléique) du commerce (M_{w} ≈ 65,000) sont dissouts dans 250ml de toluène sous agitation à la température de la pièce. De l'octadécylamine (18 g) dans 100 ml de toluène est ajouté goutte à goutte à la solution sous agitation sur une période de 2 heures. Ensuite, 40 g de Jeffamine® de type M-1000 (XTJ-506) avec un ratio PO/EO de 3:19 dilués dans 50 ml de toluène sont ajoutés rapidement et toujours sous agitation. La solution ternaire résultante est ensuite placée dans un ballon de 500 ml équipé d'un appareil Dean-Stark et d'un condenseur. La solution est portée à reflux pendant 8 heures, période durant laquelle l'eau libérée lors de la formation de l'imide apparait progressivement dans la burette de l'appareil Dean-Stark.

La solution visqueuse de polymère résultante est ensuite filtrée et évaporée dans un évaporateur rotatif. La substance collante obtenue est redissoute dans 625 ml d'heptane et lavée 5 fois avec un volume de 100 ml d'une solution aqueuse d'acide sulfurique (H₂SO₄) à 0.1 M afin d'éliminer l'excès de Jeffamine®. L'extraction de la Jeffamine® est ensuite suivie d'un rinçage avec 5 portions d'eau déminéralisée. Le séchage de la solution d'heptane est effectué par l'addition de 40 g de tamis moléculaire 4Å préalablement traité sous vide à 200°C. La solution à 10 % (poids/volume) du Polymèr e 3 dans l'heptane ainsi obtenue est prête pour dilution et/ou utilisation ultérieure dans le laminage d'un métal alcalin comme le lithium.

### Exemple de Synthèse 2

36.26 g d'un polymère poly(octadécène-*alt*-anhydride maléique) du commerce (M_{w} ≈ 65,000) et 11 g de triéthylamine sont dissouts dans 250 mL de toluène sous agitation à la température de la pièce. De l'octadécylamine (21.5g) dans 100 ml de toluène est ajouté goutte à goutte à la solution sous agitation sur une période de 2 heures. Ensuite, 45 g de Jeffamine® de type M-2070 avec un ratio PO/EO de 10:31 dissous dans 100 ml de toluène sont ajoutés rapidement et toujours sous agitation. La solution quaternaire résultante est ensuite placée dans un ballon de 500 ml équipé d'un appareil Dean-Stark et d'un condenseur. La solution est portée à reflux pendant 8 heures, période durant laquelle l'eau libérée lors de la formation de l'imide apparait progressivement dans la burette de l'appareil Dean-Stark.

La solution visqueuse de polymère résultante est ensuite filtrée et évaporée. La substance cireuse obtenue est redissoute dans 900 ml d'heptane et lavée 5 fois avec un volume de 200 ml d'une solution aqueuse d'acide sulfurique (H₂SO₄) à 0.1 M afin d'éliminer l'excès de Jeffamine® et de triéthylamine. L'extraction est ensuite suivie d'un rinçage avec 5 portions d'eau déminéralisée. Le séchage de la solution d'heptane est effectué par l'addition de 40 g de tamis moléculaire 4Å préalablement traité sous vide à 200°C. La solution à 10 % (poids/volume) du Polymère 4 dans l'heptane ainsi obtenue est prête pour dilution et/ou utilisation ultérieure dans le laminage d'un métal alcalin comme le lithium.

### Exemple de Synthèse 3

10 g d'anhydride maléique du commerce (Aldrich) sont ajoutés à une solution de 105 g de Jeffamine® M-1000 (Huntsman corporation) dans 300 mL de toluène. Le mélange réactionnel est soumis à une déshydratation de type Dean-Stark pour effectuer l'imidization des groupements terminaux NH₂ de la Jeffamine pendant 5 heures. La solution limpide obtenue est refroidie à température 0°C et 25,8 g de 1-octadecène et 1,3 g d'azobis(isobutyronitrile) sont ajoutés. Le mélange est désaéré par bullage d'azote (100 ml/mn) pendant une heure. Le balayage de gaz neutre est arrêté et le mélange réactionnel est porté à 80°C pendant 24 heures. La solution de couleur légèrement brune est lavée avec une solution d'acide sulfurique 0,1 M à trois reprises, puis à l'eau pure de nouveau à trois reprises. La solution surnageant est séparée et le toluène est évaporé. On obtient un liquide visqueux d'une masse molaire d'environ 5000 g/mol (Polymère 1) qui peut être utilisé dans un processus de laminage.

### Exemple de Synthèse 4

De manière similaire à l'Exemple de Synthèse 3, 10 g d'anhydride maléique du commerce (Aldrich) sont ajoutés à une solution de 210 g de Jeffamine® M-2070 (Huntsman corporation) dans 500 ml de toluène. Le mélange réactionnel est soumis à une déshydratation de type Dean-Stark pendant 5 heures. La solution limpide obtenue est refroidie à température 0°C et 25,8 g de 1-octadecène et 1,6 g d'azobis(isobutyronitrile) sont ajoutés. Le mélange est désaéré par bullage d'azote (100 ml/mn) pendant une heure. Le balayage de gaz neutre est arrêté et le mélange réactionnel est porté à 80°C pendant 24 heures. La solution de couleur légèrement brune est lavée avec une solution d'acide sulfurique 0,1 M à trois reprises, puis à l'eau pure de nouveau à trois reprises. La solution surnageant est séparée et le toluène est évaporé. On obtient un liquide visqueux ayant une masse molaire d'environ 5000 (Polymère 2) qui peut être utilisé dans un processus de laminage.

De nombreuses modifications pourraient être apportées à l'un ou l'autre des modes de réalisation décrits ci-dessus sans s'éloigner de la portée de l'invention telle qu'envisagée.

## Revendications

1. Utilisation d'un polymère de Formule I: 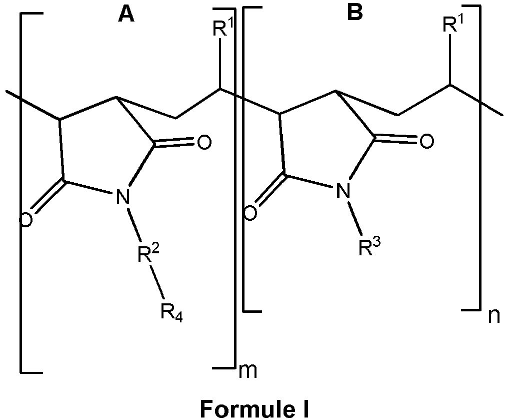
comme agent lubrifiant dans le laminage de films de métaux alcalins,
dans lequel,
m et n désignent respectivement le nombre d'unités répétitives A et B dans le polymère, m étant un nombre entier positif et n étant un nombre entier positif ou zéro quand l'unité répétitive B est absente, et où m et n sont choisis tel que la masse moléculaire du polymère de Formule I se situe dans l'intervalle de 1000 à 10⁶;
R¹ est, indépendamment à chaque occurrence, choisi parmi les radicaux hydrocarbonés monovalents linéaires ou ramifiés;
R² est, indépendamment à chaque occurrence, choisi parmi -CH₂CH₂O- et -CH₂CH₂CH₂O-, où R² est lié à N par un atome de carbone, ou R² est absent et N est lié de façon covalente à R⁴;
R³ est, indépendamment à chaque occurrence, choisi parmi les radicaux hydrocarbonés monovalents linéaires ou ramifiés;
R⁴ est, indépendamment à chaque occurrence, un résidu polyéther de formule -[CH(R⁵)CH₂O]ₛCH₃, où 5 ≤ s ≤ 100 ; et
R⁵ est, indépendamment à chaque occurrence, un atome d'hydrogène ou un groupement CH₃.

2. L'utilisation selon la revendication 1, dans lequel m et n sont choisis de sorte que la masse moléculaire du polymère de Formule I se situe dans l'intervalle de 2000 à 250 000.

3. L'utilisation selon la revendication 1 ou 2, dans lequel m et n sont choisis de sorte que la masse moléculaire du polymère de Formule I se situe dans l'intervalle de 2000 à 50 000.

4. L'utilisation selon la revendication 1 ou 2, dans lequel m et n sont choisis de sorte que la masse moléculaire du polymère de Formule I se situe dans l'intervalle de 50 000 à 200 000.

5. L'utilisation selon l'une quelconque des revendications 1 à 4, dans lequel R¹ est, indépendamment à chaque occurrence, un radical hydrocarboné linéaire ou ramifié de formule CᵣH₂ᵣ₊₁, où 4 ≤ r ≤ 24, de préférence 8 ≤ r ≤ 18.

6. L'utilisation selon l'une quelconque des revendications 1 à 5, dans lequel R³ est, indépendamment à chaque occurrence, un radical hydrocarboné linéaire ou ramifié de formule CₜH₂ₜ₊₁, où 4 ≤ t ≤ 24, de préférence 8 ≤ t ≤ 18.

7. L'utilisation selon l'une quelconque des revendications 1 à 6, dans lequel 8 ≤ s ≤ 50.

8. L'utilisation selon l'une quelconque des revendications 1 à 7, dans lequel le ratio des unités répétitives A:B en pourcentage molaire dans le polymère se situe dans l'intervalle de 100:0 à 10:90.

9. L'utilisation selon l'une quelconque des revendications 1 à 8, dans lequel R² est un radical divalent de formule -CH₂CH₂O-.

10. L'utilisation selon l'une quelconque des revendications 1 à 8, dans lequel R² est un radical divalent de formule -CH₂CH₂CH₂O-.

11. L'utilisation selon l'une quelconque des revendications 1 à 8, dans lequel R² est absent.

12. L'utilisation selon l'une quelconque des revendications 1 à 11, dans lequel R⁴ est choisi parmi :
(a) un résidu polyéther de formule -[CH(R⁵)CH₂O]ₛCH₃, dans lequel R⁵ est CH₃ à chaque occurrence;
(b) un résidu polyéther de formule -[CH(R⁵)CH₂O]ₛCH₃, dans lequel R⁵ est un hydrogène à chaque occurrence; et
(c) un résidu polyéther de formule -[CH(R⁵)CH₂O]ₛCH₃, et dans lequel R⁵ est, indépendamment à chaque occurrence, CH₃ ou hydrogène, tel que R⁴ est un résidu polyéther comprenant des unités répétitives d'oxyde de propylène (PO) et d'oxyde d'éthylène (EO).

13. L'utilisation selon la revendication 12, dans lequel le résidu polyéther est un résidu polyéther (c) ayant un ratio molaire en PO:EO situé entre 20:1 et 1:30, de préférence entre 10:1 et 1:10.

14. L'utilisation selon la revendication 12 ou 13, dans lequel le résidu polyéther a une masse moléculaire se situant entre 300 g/mole et 5000 g/mole.

15. L'utilisation selon la revendication 1, dans laquelle le polymère de Formule I est choisi parmi les polymères suivants:
- R¹ est C₁₆H_{33;} R² est absent; R³ est absent; R⁴ est un résidu polyéther de formule -[CH(R⁵)CH₂O]ₛCH₃, et dans lequel R⁵ est, indépendamment à chaque occurrence, CH₃ ou hydrogène, tel que R⁴ est un résidu polyéther comprenant des unités répétitives d'oxyde de propylène (PO) et d'oxyde d'éthylène (EO), ayant un ratio molaire en PO:EO de 3 :19; le ratio des unités répétitives A:B en pourcentage molaire dans le polymère est 100 :00; et la masse moléculaire du polymère est 5000; ou
- R¹ est C₁₆H_{33;} R² est absent; R³ est absent; R⁴ est un résidu polyéther de formule -[CH(R⁵)CH₂O]ₛCH₃, et dans lequel R⁵ est, indépendamment à chaque occurrence, CH₃ ou hydrogène, tel que R⁴ est un résidu polyéther comprenant des unités répétitives d'oxyde de propylène (PO) et d'oxyde d'éthylène (EO), ayant un ratio molaire en PO:EO de 10 :31; le ratio des unités répétitives A:B en pourcentage molaire dans le polymère est 100 :00; et la masse moléculaire du polymère est 5000; ou
- R¹ est C₁₆H_{33;} R² est absent; R³ est C₁₈H₃₇; R⁴ est un résidu polyéther de formule -[CH(R⁵)CH₂O]ₛCH₃, et dans lequel R⁵ est, indépendamment à chaque occurrence, CH₃ ou hydrogène, tel que R⁴ est un résidu polyéther comprenant des unités répétitives d'oxyde de propylène (PO) et d'oxyde d'éthylène (EO), ayant un ratio molaire en PO:EO de 3 :19; le ratio des unités répétitives A:B en pourcentage molaire dans le polymère est 33 :67; et la masse moléculaire du polymère est entre 145000 et 175000; ou
- R¹ est C₁₆H₃₃; R² est absent; R³ est C₁₈H₃₇; R⁴ est un résidu polyéther de formule -[CH(R⁵)CH₂O]ₛCH₃, et dans lequel R⁵ est, indépendamment à chaque occurrence, CH₃ ou hydrogène, tel que R⁴ est un résidu polyéther comprenant des unités répétitives d'oxyde de propylène (PO) et d'oxyde d'éthylène (EO), ayant un ratio molaire en PO:EO de 10 :31; le ratio des unités répétitives A:B en pourcentage molaire dans le polymère est 20 :80; et la masse moléculaire du polymère est entre 165000 et 195000; ou
- R¹ est C₁₆H₃₃; R² est absent; R³ est absent; R⁴ est un résidu polyéther de formule -[CH(R⁵)CH₂O]ₛCH₃, et dans lequel R⁵ est, indépendamment à chaque occurrence, CH₃ ou hydrogène, tel que R⁴ est un résidu polyéther comprenant des unités répétitives d'oxyde de propylène (PO) et d'oxyde d'éthylène (EO), ayant un ratio molaire en PO:EO de 29 :6; le ratio des unités répétitives A:B en pourcentage molaire dans le polymère est 100 :0; et la masse moléculaire du polymère est 7000.

16. Utilisation d'une composition dans le laminage de films de métaux alcalins, la composition comprenant un polymère de Formule I tel que défini dans l'une quelconque des revendications 1 à 15 conjointement avec un solvant inerte aux métaux alcalins de préférence choisi parmi les solvants hydrocarbonés, les solvants aromatiques et leurs mélanges.

17. L'utilisation de la composition selon la revendication 16, dans laquelle le solvant est un système de solvants comprenant au moins un solvant aromatique, de préférence le toluène, et au moins un solvant hydrocarboné, de préférence l'hexane ou l'heptane.

18. L'utilisation de la composition selon la revendication 16 ou 17, dans laquelle le polymère de Formule I est présent à une concentration de 0.001% à 10% (poids/volume), de préférence dans l'intervalle de 0.01% à 5% (poids/volume), par rapport au volume total de la composition.

19. Film de métal alcalin ayant une première et une deuxième surfaces, et comprenant sur au moins l'une des première et deuxième surfaces, une mince couche de l'agent lubrifiant tel que défini dans l'une quelconque des revendications 1 à 15 ou de la composition telle que définie dans l'une quelconque des revendications 16 à 18.

20. Film de métal alcalin selon la revendication 19, ayant une épaisseur située dans l'intervalle de 5 µm à 50 µm.

21. Film de métal alcalin selon la revendication 19 ou 20, dans lequel ledit métal alcalin est choisi parmi le lithium, les alliages de lithium, le sodium, et les alliages de sodium.

22. Film de métal alcalin selon la revendication 21, dans lequel le métal alcalin est du lithium ayant une pureté d'au moins 99% en poids, ou un alliage de lithium comprenant moins de 3000 ppm d'impuretés en poids.

23. Film de métal alcalin selon l'une quelconque des revendications 19 à 22, comprenant une couche de passivation sur au moins l'une de ses première et deuxième surfaces.

24. Film de métal alcalin selon la revendication 23, dans lequel la couche de passivation est d'une épaisseur de 100 Å ou moins, ou de 50 Å ou moins.

25. Film de métal alcalin selon la revendication 23 ou 24, dans lequel ledit métal alcalin est le lithium ou un alliage de lithium et la couche de passivation comprend du Li₂O, du Li₂CO₃, du LiOH ou une combinaison d'au moins deux de ceux-ci.

26. Un procédé pour la production d'un film de métal alcalin, le procédé comprenant les étapes de:
a) application d'une composition telle que définie dans l'une quelconque des revendications 16 à 18 sur au moins l'une des première et deuxième surfaces d'un feuillard de métal alcalin afin d'obtenir un feuillard de métal alcalin lubrifié; et
b) laminage du feuillard de métal alcalin lubrifié obtenu à l'étape (a) entre au moins deux rouleaux pour produire un film de métal alcalin.

27. Procédé selon la revendication 26, lequel est accompli sous atmosphère d'air essentiellement sec, de préférence dans une chambre anhydre ou à humidité contrôlée avec un point de rosée situé entre -45 et -55°C, pour 0.7 à 2.2% d'humidité relative.

28. Électrode comprenant un film de métal alcalin tel que défini dans l'une quelconque des revendications 19 à 25.

29. Cellule électrochimique comprenant une électrode telle que définie à la revendication 28, une contre-électrode et un électrolyte entre l'électrode et la contre-électrode.

## Patentansprüche

1. Verwendung eines Polymers der Formel I: 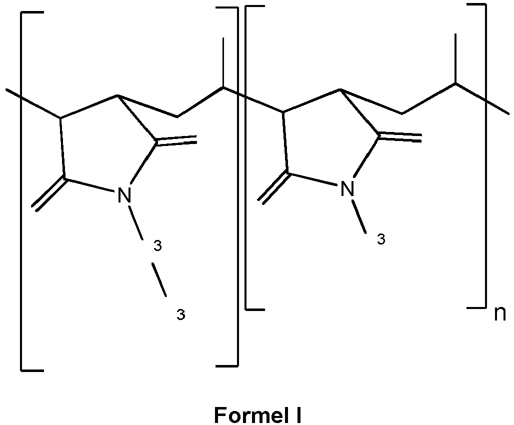
als Schmiermittel beim Walzen von Alkalimetallfilmen,
wobei:
m bzw. n die Anzahl der sich wiederholenden Einheiten A und B in dem Polymer bezeichnen, wobei m eine positive ganze Zahl und n eine positive ganze Zahl oder Null ist, wenn die sich wiederholende Einheit B nicht vorhanden ist, und wobei m und n so ausgewählt sind, dass das Molekulargewicht des Polymers der Formel I im Bereich von 1000 bis 10⁶ liegt;
R¹ unabhängig bei jedem Vorkommen aus linearen oder verzweigten einwertigen Kohlenwasserstoffresten ausgewählt ist;
R² unabhängig bei jedem Vorkommen aus -CH₂CH₂O- und -CH₂CH₂CH₂O-ausgewählt ist, wobei R² durch ein Kohlenstoffatom an N gebunden ist oder R² nicht vorhanden ist und N kovalent an R⁴ gebunden ist;
R³ unabhängig bei jedem Vorkommen aus linearen oder verzweigten einwertigen Kohlenwasserstoffresten ausgewählt ist;
R⁴ unabhängig bei jedem Vorkommen ein Polyetherrest der Formel -[CH(R⁵)CH₂O]ₛCH₃ ist, wobei 5 ≤ s ≤ 100; und
R⁵ unabhängig bei jedem Vorkommen ein Wasserstoffatom oder eine CH₃-Gruppe ist.

2. Verwendung nach Anspruch 1, wobei m und n so ausgewählt sind, dass das Molekulargewicht des Polymers der Formel I im Bereich von 2000 bis 250.000 liegt.

3. Verwendung nach Anspruch 1 oder 2, wobei m und n so ausgewählt sind, dass das Molekulargewicht des Polymers der Formel I im Bereich von 2000 bis 50.000 liegt.

4. Verwendung nach Anspruch 1 oder 2, wobei m und n so ausgewählt sind, dass das Molekulargewicht des Polymers der Formel I im Bereich von 50.000 bis 200.000 liegt.

5. Verwendung nach irgendeinem der Ansprüche 1 bis 4, wobei R¹ unabhängig bei jedem Vorkommen ein linearer oder verzweigter Kohlenwasserstoffrest der Formel CᵣH₂ᵣ₊₁ ist, wobei 4 ≤ r ≤ 24, vorzugsweise 8 ≤ r ≤ 18.

6. Verwendung nach irgendeinem der Ansprüche 1 bis 5, wobei R³ unabhängig bei jedem Vorkommen ein linearer oder verzweigter Kohlenwasserstoffrest der Formel C₁H₂ₜ₊₁ ist, wobei 4 ≤ t ≤ 24, vorzugsweise 8 ≤ t ≤ 18.

7. Verwendung nach irgendeinem der Ansprüche 1 bis 6, wobei 8 ≤ s ≤ 50.

8. Verwendung nach irgendeinem der Ansprüche 1 bis 7, wobei das in Prozent molare Verhältnis der sich wiederholenden Einheiten A:B in dem Polymer im Bereich von 100:0 bis 10:90 liegt.

9. Verwendung nach irgendeinem der Ansprüche 1 bis 8, wobei R² ein zweiwertiger Rest der Formel -CH₂CH₂O- ist.

10. Verwendung nach irgendeinem der Ansprüche 1 bis 8, wobei R² ein zweiwertiger Rest der Formel -CH₂CH₂CH₂O- ist.

11. Verwendung nach irgendeinem der Ansprüche 1 bis 8, wobei R² nicht vorhanden ist.

12. Verwendung nach irgendeinem der Ansprüche 1 bis 11, wobei R⁴ ausgewählt ist aus:
(a) einem Polyetherrest der Formel -[CH(R⁵)CH₂O]ₛCH₃, wobei R⁵ bei jedem Vorkommen CH₃ ist;
(b) einem Polyetherrest der Formel -[CH(R⁵)CH₂O]ₛCH₃, wobei R⁵ bei jedem Vorkommen ein Wasserstoff ist; und
(c) einem Polyetherrest der Formel-[CH(R⁵)CH₂O]ₛCH₃, und wobei R⁵ unabhängig bei jedem Vorkommen CH₃ oder Wasserstoff ist, so dass R⁴ ein Polyetherrest ist, der Propylenoxid (PO)- und Ethylenoxid (EO)-Wiederholungseinheiten umfasst.

13. Verwendung nach Anspruch 12, wobei der Polyetherrest ein Polyetherrest (c) mit einem molaren PO:EO-Verhältnis zwischen 20:1 und 1:30, vorzugsweise zwischen 10:1 und 1:10, ist.

14. Verwendung nach Anspruch 12 oder 13, wobei der Polyetherrest ein Molekulargewicht zwischen 300 g/mol und 5000 g/mol aufweist.

15. Verwendung nach Anspruch 1, wobei das Polymer der Formel I aus den folgenden Polymeren ausgewählt ist:
- R¹ ist C₁₆H₃₃; R² ist nicht vorhanden; R³ ist nicht vorhanden; R⁴ ist ein Polyetherrest der Formel -[CH(R⁵)CH₂O]ₛCH₃, und wobei R⁵ unabhängig bei jedem Vorkommen CH₃ oder Wasserstoff ist, so dass R⁴ ein Polyetherrest ist, der Propylenoxid (PO)- und Ethylenoxid (EO)-Wiederholungseinheiten mit einem molaren PO:EO-Verhältnis von 3:19 umfasst; das in Prozent molare Verhältnis der sich wiederholenden Einheiten A:B in dem Polymer 100:00 beträgt; und das Molekulargewicht des Polymers 5000 beträgt; oder
- R¹ ist C₁₆H₃₃; R² ist nicht vorhanden; R³ ist nicht vorhanden; R⁴ ist ein Polyetherrest der Formel -[CH(R⁵)CH₂O]ₛCH₃, und wobei R⁵ unabhängig bei jedem Vorkommen CH₃ oder Wasserstoff ist, so dass R⁴ ein Polyetherrest ist, der Propylenoxid (PO)- und Ethylenoxid (EO)-Wiederholungseinheiten mit einem molaren PO:EO-Verhältnis von 10:31 umfasst; das in Prozent molare Verhältnis der sich wiederholenden Einheiten A:B in dem Polymer 100:00 beträgt; und das Molekulargewicht des Polymers 5000 beträgt; oder
- R¹ ist C₁₆H₃₃; R² ist nicht vorhanden; R³ ist C₁₈H₃₇; R⁴ ist ein Polyetherrest der Formel -[CH(R⁵)CH₂O]ₛCH₃, und wobei R⁵ unabhängig bei jedem Vorkommen CH₃ oder Wasserstoff ist, so dass R⁴ ein Polyetherrest ist, der Propylenoxid (PO)- und Ethylenoxid (EO)-Wiederholungseinheiten mit einem molaren PO:EO-Verhältnis von 3:19 umfasst; das in Prozent molare Verhältnis der sich wiederholenden Einheiten A:B in dem Polymer 33:67 beträgt; und das Molekulargewicht des Polymers zwischen 145.000 und 175.000 liegt; oder
- R¹ ist C₁₆H₃₃; R² ist nicht vorhanden; R³ ist C₁₈H₃₇; R⁴ ist ein Polyetherrest der Formel -[CH(R⁵)CH₂O]ₛCH₃, und wobei R⁵ unabhängig bei jedem Vorkommen CH₃ oder Wasserstoff ist, so dass R⁴ ein Polyetherrest ist, der Propylenoxid (PO)- und Ethylenoxid (EO)-Wiederholungseinheiten mit einem molaren PO:EO-Verhältnis von 10:31 umfasst; das in Prozent molare Verhältnis der sich wiederholenden Einheiten A:B in dem Polymer 20:80 beträgt; und das Molekulargewicht des Polymers zwischen 165.000 und 195.000 liegt; oder
- R¹ ist C₁₆H₃₃; R² ist nicht vorhanden; R³ ist nicht vorhanden; R⁴ ist ein Polyetherrest der Formel -[CH(R⁵)CH₂O]ₛCH₃, und wobei R⁵ unabhängig bei jedem Vorkommen CH₃ oder Wasserstoff ist, so dass R⁴ ein Polyetherrest ist, der Propylenoxid (PO)- und Ethylenoxid (EO)-Wiederholungseinheiten mit einem molaren PO:EO-Verhältnis von 29:6 umfasst; das in Prozent molare Verhältnis der sich wiederholenden Einheiten A:B in dem Polymer 100:0 beträgt; und das Molekulargewicht des Polymers 7000 beträgt.

16. Verwendung einer Zusammensetzung beim Walzen von Alkalimetallfilmen, wobei die Zusammensetzung ein Polymer der Formel I wie in irgendeinem der Ansprüche 1 bis 15 definiert umfasst zusammen mit einem Lösungsmittel, das in Bezug auf die Alkalimetalle inert ist, vorzugsweise ausgewählt aus Kohlenwasserstofflösungsmitteln, aromatischen Lösungsmitteln und Gemischen davon.

17. Verwendung der Zusammensetzung nach Anspruch 16, wobei das Lösungsmittel ein System von Lösungsmitteln ist, das mindestens ein aromatisches Lösungsmittel, vorzugsweise Toluol, und mindestens ein Kohlenwasserstofflösungsmittel, vorzugsweise Hexan oder Heptan umfasst.

18. Verwendung der Zusammensetzung nach Anspruch 16 oder 17, wobei das Polymer der Formel I in einer Konzentration von 0,001% bis 10% (Gewicht/Volumen), vorzugsweise im Bereich von 0,01% bis 5% (Gewicht/Volumen), in Bezug auf das Gesamtvolumen der Zusammensetzung, vorliegt.

19. Alkalimetallfilm mit einer ersten und einer zweiten Oberfläche, und umfassend auf mindestens einer der ersten und zweiten Oberflächen eine dünne Schicht des Schmiermittels wie in irgendeinem der Ansprüche 1 bis 15 definiert oder der Zusammensetzung wie in irgendeinem der Ansprüche 16 bis 18 definiert.

20. Alkalimetallfilm nach Anspruch 19, mit einer Dicke im Bereich von 5 µm bis 50 µm.

21. Alkalimetallfilm nach Anspruch 19 oder 20, wobei das Alkalimetall aus Lithium, Lithiumlegierungen, Natrium und Natriumlegierungen ausgewählt ist.

22. Alkalimetallfilm nach Anspruch 21, wobei das Alkalimetall Lithium mit einer Reinheit von mindestens 99 Gewichts-% oder eine Lithiumlegierung, umfassend mindestens 3000 ppm Verunreinigungen nach Gewicht, ist.

23. Alkalimetallfilm nach irgendeinem der Ansprüche 19 bis 22, umfassend eine Passivierungsschicht auf mindestens einer ihrer ersten und zweiten Oberflächen.

24. Alkalimetallfilm nach Anspruch 23, wobei die Passivierungsschicht eine Dicke von 100 Å oder weniger, oder von 50 Å oder weniger, aufweist.

25. Alkalimetallfilm nach Anspruch 23 oder 24, wobei das Alkalimetall Lithium oder eine Lithiumlegierung ist und die Passivierungsschicht Li₂O, Li₂CO₃, LiOH oder eine Kombination aus mindestens zwei davon ist.

26. Verfahren zur Herstellung eines Alkalimetallfilms, wobei das Verfahren die Schritte umfasst:
a) Auftragen einer Zusammensetzung wie in irgendeinem der Ansprüche 16 bis 18 definiert auf mindestens eine der ersten und zweiten Oberflächen einer Alkalimetallfolie, um eine geschmierte Alkalimetallfolie zu erhalten; und
b) Walzen der in Schritt a) erhaltenen geschmierten Alkalimetallfolie zwischen mindestens zwei Walzen, um einen Alkalimetallfilm herzustellen.

27. Verfahren nach Anspruch 26, das in einer im Wesentlichen trockenen Luftatmosphäre durchgeführt wird, vorzugsweise in einer wasserfreien Kammer oder einer Kammer mit einer kontrollierten Feuchtigkeit mit einem Taupunkt zwischen -45 und -55°C, für 0,7 bis 2,2% relative Feuchtigkeit.

28. Elektrode, umfassend einen Alkalimetallfilm wie in irgendeinem der Ansprüche 19 bis 25 definiert.

29. Elektrochemische Zelle, umfassend eine Elektrode wie in Anspruch 28 definiert, eine Gegenelektrode und einen Elektrolyten zwischen der Elektrode und der Gegenelektrode.

## Claims

1. Use of a polymer of Formula I: 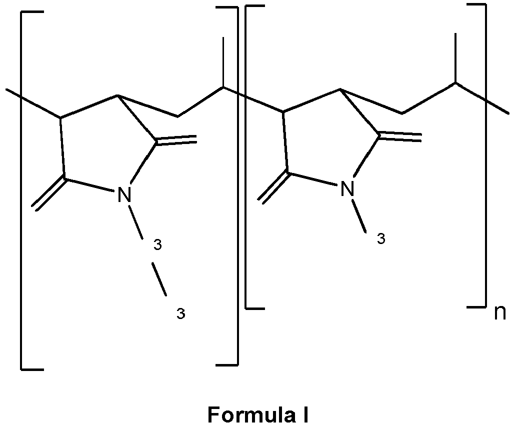
as a lubricating agent in the rolling of alkali metal films,
wherein:
m and n respectively denote the number of repeating units A and B in the polymer, m being a positive integer and n being a positive integer or zero when the repeating unit B is absent, and where m and n are selected so that the molecular weight of the polymer of Formula I is in the range of 1000 to 10⁶;
R¹ is, independently at each occurrence, selected from linear or branched monovalent hydrocarbon radicals;
R² is, independently at each occurrence, selected from -CH₂CH₂O- and -CH₂CH₂CH₂O-, where R² is bound to N by a carbon atom, or R² is absent and N is covalently bound to R⁴;
R³ is, independently at each occurrence, selected from linear or branched monovalent hydrocarbon radicals;
R⁴ is, independently at each occurrence, a polyether residue of formula -[CH(R⁵)CH₂O]ₛCH₃, where 5 ≤ s ≤ 100; and
R⁵ is, independently at each occurrence, a hydrogen atom or a CH₃ group.

2. The use according to claim 1, wherein m and n are selected so that the molecular weight of the polymer of Formula I is in the range of 2000 to 250,000.

3. The use according to claim 1 or 2, wherein m and n are selected so that the molecular weight of the polymer of Formula I is in the range of 2000 to 50,000.

4. The use according to claim 1 or 2, wherein m and n are selected so that the molecular weight of the polymer of Formula I is in the range of 50,000 to 200,000.

5. The use according to any one of claims 1 to 4, wherein R¹ is, independently at each occurrence, a linear or branched hydrocarbon radical of formula CᵣH₂ᵣ₊₁, where 4 ≤ r ≤ 24, preferably 8 ≤ r ≤ 18.

6. The use according to any one of claims 1 to 5, wherein R³ is, independently at each occurrence, a linear or branched hydrocarbon radical of formula CₜH₂ₜ₊₁, where 4 ≤ t ≤ 24, preferably 8 ≤ t ≤ 18.

7. The use according to any one of claims 1 to 6, wherein 8 ≤ s ≤ 50.

8. The use according to any one of claims 1 to 7, wherein the molar percentage ratio of repeating units A:B in the polymer is in the range from 100:0 to 10:90.

9. The use according to any one of claims 1 to 8, wherein R² is a divalent radical of formula -CH₂CH₂O-.

10. The use according to any one of claims 1 to 8, wherein R² is a divalent radical of formula -CH₂CH₂CH₂O-.

11. The use according to any one of claims 1 to 8, wherein R² is absent.

12. The use according to any one of claims 1 to 11, wherein R⁴ is selected from:
(a) a polyether residue of formula -[CH(R⁵)CH₂O]ₛCH₃, wherein R⁵ is CH₃ at each occurrence;
(b) a polyether residue of formula -[CH(R⁵)CH₂O]ₛCH₃, wherein R⁵ is a hydrogen at each occurrence; and
(c) a polyether residue of formula -[CH(R⁵)CH₂O]ₛCH₃, and wherein R⁵ is, independently at each occurrence, CH₃ or hydrogen, such that R⁴ is a polyether residue comprising propylene oxide (PO) and ethylene oxide (EO) repeating units.

13. The use according to claim 12, wherein the polyether residue is a polyether residue (c) having a PO:EO molar ratio of between 20:1 and 1:30, preferably between 10:1 and 1:10.

14. The use according to claim 12 or 13, wherein the polyether residue has a molecular weight between 300 g/mol and 5000 g/mol.

15. The use according to claim 1, wherein the polymer of Formula I is selected from the following polymers:
- R¹ is C₁₆H₃₃; R² is absent; R³ is absent; R⁴ is a polyether residue of formula -[CH(R⁵)CH₂O]ₛCH₃, and wherein R⁵ is, independently at each occurrence, CH₃ or hydrogen, such that R⁴ is a polyether residue comprising propylene oxide (PO) and ethylene oxide (EO) repeating units having a PO:EO molar ratio of 3:19; the molar percentage ratio of repeating units A:B in the polymer is of 100:00; and the molecular weight of the polymer is 5000; or
- R¹ is C₁₆H₃₃; R² is absent; R³ is absent; R⁴ is a polyether residue of formula -[CH(R⁵)CH₂O]ₛCH₃, and wherein R⁵ is, independently at each occurrence, CH₃ or hydrogen, such that R⁴ is a polyether residue comprising propylene oxide (PO) and ethylene oxide (EO) repeating units having a PO:EO molar ratio of 10:31; the molar percentage ratio of repeating units A:B in the polymer is of 100:00; and the molecular weight of the polymer is 5000; or
- R¹ is C₁₆H₃₃; R² is absent; R³ is C₁₈H₃₇; R⁴ is a polyether residue of formula -[CH(R⁵)CH₂O]ₛCH₃, and wherein R⁵ is, independently at each occurrence, CH₃ or hydrogen, such that R⁴ is a polyether residue comprising propylene oxide (PO) and ethylene oxide (EO) repeating units having a PO:EO molar ratio of 3:19; the molar percentage ratio of repeating units A:B in the polymer is of 33:67; and the molecular weight of the polymer is between 145,000 and 175,000; or
- R¹ is C₁₆H₃₃; R² is absent; R³ is C₁₈H₃₇; R⁴ is a polyether residue of formula -[CH(R⁵)CH₂O]ₛCH₃, and wherein R⁵ is, independently at each occurrence, CH₃ or hydrogen, such that R⁴ is a polyether residue comprising propylene oxide (PO) and ethylene oxide (EO) repeating units having a PO:EO molar ratio of 10:31; the molar percentage ratio of repeating units A:B in the polymer is of 20:80; and the molecular weight of the polymer is between 165,000 and 195,000; or
- R¹ is C₁₆H₃₃; R² is absent; R³ is absent; R⁴ is a polyether residue of formula -[CH(R⁵)CH₂O]ₛCH₃, and wherein R⁵ is, independently at each occurrence, CH₃ or hydrogen, such that R⁴ is a polyether residue comprising propylene oxide (PO) and ethylene oxide (EO) repeating units having a PO:EO molar ratio of 29:6; the molar percentage ratio of repeating units A:B in the polymer is of 100:0; and the molecular weight of the polymer is 7000.

16. Use of a composition in the rolling of alkali metal films, the composition comprising a polymer of Formula I as defined in any one of claims 1 to 15 together with a solvent that is inert with respect to the alkali metals, preferably selected from hydrocarbon solvents, aromatic solvents and mixtures thereof.

17. The use of the composition according to claim 16, wherein the solvent is a system of solvents comprising at least one aromatic solvent, preferably toluene, and at least one hydrocarbon solvent, preferably hexane or heptane.

18. The use of the composition according to claim 16 or 17, wherein the polymer of Formula I is present at a concentration of 0.001% to 10% (weight/volume), preferably in the range of 0.01% to 5% (weight/volume), with respect to the total volume of the composition.

19. Alkali metal film having a first and a second surfaces and comprising on at least one of the first and second surfaces, a thin layer of the lubricating agent as defined in any one of claims 1 to 15 or of the composition as defined in any one of claims 16 to 18.

20. The alkali metal film according to claim 19, having a thickness in the range of 5 µm to 50 µm.

21. The alkali metal film according to claim 19 or 20, wherein said alkali metal is selected from lithium, lithium alloys, sodium, and sodium alloys.

22. The alkali metal film according to claim 21, wherein the alkali metal is lithium having a purity of at least 99% by weight, or a lithium alloy comprising at least 3000 ppm of impurities by weight.

23. The alkali metal film according to any one of claims 19 to 22, comprising a passivation layer on at least one of its first and second surfaces.

24. The alkali metal film according to claim 23, wherein the passivation layer has a thickness of 100 Å or less, or of 50 Å or less.

25. The alkali metal film according to claim 23 or 24, wherein said alkali metal is lithium or a lithium alloy and the passivation layer comprises Li₂O, Li₂CO₃, LiOH or a combination of at least two of thereof.

26. Process for producing an alkali metal film, the process comprising the steps of:
a) applying a composition as defined in any one of claims 16 to 18 on at least one of the first and second surfaces of an alkali metal foil to obtain a lubricated alkali metal foil; and
b) rolling the lubricated alkali metal foil obtained in step (a) between at least two rolls to produce an alkali metal film.

27. The process according to claim 26, which is performed in an essentially dry air atmosphere, preferably in an anhydrous chamber or a chamber having a controlled humidity with a dew point between -45 and -55 °C, for 0.7 to 2.2% of relative humidity.

28. Electrode comprising an alkali metal film as defined in any one of claims 19 to 25.

29. Electrochemical cell comprising an electrode as defined in claim 28, a counter-electrode and an electrolyte between the electrode and counter-electrode.
